# EUROPÄISCHE PATENTSCHRIFT

(11) **EP 2 452 863 B1**
(45) Veröffentlichungstag und Bekanntmachung des Hinweises auf die Patenterteilung: **20.06.2018**
(21) Anmeldenummer: 11007346.7
(22) Anmeldetag: 09.09.2011
(51) Int. Cl.: B62D 27/06

(54) **Befestigungseinrichtung welcher Anbauteile an einem Fahrzeugrahmen**
Device for fixing components on a chassis
Dispositif de fixation de composants sur un châssis

(30) Priorität: 12.11.2010 AT 18662010
(43) Veröffentlichungstag der Anmeldung: 16.05.2012
(73) Patentinhaber: MAN Truck & Bus Österreich AG, 4400 Steyr (AT)
(72) Erfinder: Pertlik, Rudolf, 1220 Wien (AT); Theil, Norbert, 1100 Wien (AT)
(74) Vertreter: Liebl, Thomas

(56) Entgegenhaltungen:
- DE-A1- 10 257 222
- DE-A1-102006 018 360
- DE-A1-102008 009 292
- DE-A1-102009 016 849

## Beschreibung

Die vorliegende Erfindung betrifft eine Befestigungseinrichtung zur Befestigung wenigstens eines Anbauteils an einem Fahrzeugrahmen nach dem Oberbegriff des Anspruchs 1. Bei dem Fahrzeug handelt es sich beispielsweise um ein Nutzfahrzeug. Darüber hinaus betrifft die Erfindung ein geländegängiges Nutzfahrzeug mit einem Fahrzeugrahmen, der ein geschlossenes Querschnittsprofil mit wenigstens einer solchen Befestigungseinrichtung aufweist.

Im Stand der Technik sind Nutzfahrzeuge bekannt, welche einen Fahrzeugrahmen, bestehend aus Längsträgern mit offenen oder geschlossenen Querschnitten, benutzen. Zur Befestigung von Komponenten des Fahrzeugs am Fahrzeugrahmen wird dabei im Stand der Technik vorzugsweise auf Schraubverbindungen zurückgegriffen. Bei offenen Querschnittsprofilen werden dazu Bohrungen in den Längsträgern des Fahrzeugrahmens angeordnet, um danach die zu befestigenden Komponenten vorzugsweise mittels Schraubverbindungen, welche durch diese Bohrungen hindurchgreifen, daran zu befestigen.

Nachteilig hierbei ist es, dass bei der Verwendung von Rahmenlängsträgern mit geschlossenen Querschnittsprofilen zum einen Einbußen hinsichtlich der Festigkeit und andererseits hinsichtlich der Dichtheit festzustellen sind.

Weiter offenbart die DE 10 2009 016 849 A1 eine Befestigungseinrichtung zur Befestigung von zwei Scharnierteilen einer Fahrzeugtür an einer Karosserie eines Kraftfahrzeugs. Hierzu weist die Befestigungseinrichtung an der B-Säule der Karosserie des Kraftfahrzeugs ein Karosserieteil auf, das nach jeweils einer Lageeinstellung von zwei unabhängig voneinander verstellbaren Befestigungselementen mit jedem der Befestigungselemente verbunden wird. Das Karosserieteil bildet dabei einen Teil des Rahmens der Karosserie des Kraftfahrzeugs, wobei die Befestigungselemente über Schrauben und darauf aufschraubbare Gewindemuttern mit jeweils einem zugeordneten Scharnierteil verbunden sind. Die Schraube durchsetzt dabei eine Durchtrittsöffnung im betreffenden Scharnierteil und eine mit der Durchtrittsöffnung fluchtende Durchgangsöffnung im Befestigungselement sowie weiter eine Aussparung in dem Karosserieteil. Die Aussparung ist dabei so bemessen, dass die betreffende Gewindemutter auf das Gewinde der zugeordneten Schraube bis zum Festsitz des betreffenden Scharnierteils aufgeschraubt werden kann. Die DE 10 2006 018 360 A1 betrifft ein Bauteil zur Befestigung an einem Träger, wobei ein L-förmiger Träger und damit Fahrzeugrahmen mit seinem Schenkel in eine Aufnahme eines Befestigungselementes eingeschoben wird, und zwar dergestalt, dass das Durchgangsloch des L-förmigen Trägers mit den Langlöchern des Befestigungselementes fluchtet. Nach der Ausrichtung des Trägers kann dann eine Schraube durch die fluchtenden Löcher gesteckt und mit der Schraubenmutter verschraubt werden.

Die DE 10 2008 009 292 A1 betrifft eine Versteifungsstruktur für ein rohrförmiges Bauteil eines Hilfsrahmens, bei dem in einem Trägerbereich eine Bohrung angeordnet ist, in die ein Versteifungselement mit U-förmigem offenen Querschnitt 90° versetzt eingeschweißt ist.

Aufgabe der Erfindung ist es daher, die sich aus dem Stand der Technik ergebenen Probleme zumindest teilweise zu lösen. Diese Aufgabe wird mittels einer Befestigungseinrichtung gemäß dem Merkmal des Patentanspruchs 1 sowie einem geländegängigen Fahrzeug gemäß Patentanspruch 8 gelöst. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Vorliegend wird die Aufgabe mit einer Befestigungseinrichtung zur Befestigung wenigstens eines Anbauteils an einem Fahrzeugrahmen gelöst, wobei der Fahrzeugrahmen ein erstes geschlossenes Querschnittsprofil aufweist, und wobei wenigstens eine Aufnahme für Befestigungsmittel vorgesehen ist, die ein zweites Querschnittsprofil aufweist, wobei sich die Aufnahme von einer ersten Innenseite des Fahrzeugrahmens hin zu wenigstens einer zweiten Innenseite des Fahrzeugrahmens erstreckt und eine Öffnung zur Aufnahme der Befestigungsmittel ausbildet. Erfindungsgemäß ist vorgesehen, dass das zweite Querschnittsprofil der Aufnahme als geschlossenes Querschnittsprofil ausgebildet ist und eine durchgängige Öffnung zur Aufnahme der Befestigungsmittel ausbildet, die sich durch das gesamte geschlossene Querschnittsprofil des Fahrzeugrahmens hindurch erstreckt. Die Erfindung betrifft Fahrzeugrahmen, die aus Fahrzeuglängsträgern und -querträgern bestehen. Dabei weisen die erfindungsgemäßen Fahrzeuglängsträger oder -querträger zumindest teilweise ein geschlossenes Querschnittsprofil auf. Derartige Trägerprofile werden insbesondere bei hoch belasteten Fahrzeugen wie beispielsweise Baustellenfahrzeugen oder geländegängigen Fahrzeugen verwendet, um sehr strengen Anforderungskriterien zu genügen, wie sie beispielsweise im Bereich der Militärtechnik vorgegeben sind. Der Vorteil der vorliegenden Erfindung besteht nun darin, dass die vorgesehene Aufnahme sich innerhalb des geschlossenen Querschnittprofils von einer ersten Innenseite des Fahrzeugrahmens und/oder des geschlossenen Querschnittprofils hin zu wenigstens einer zweiten Innenseite des Fahrzeugrahmens erstreckt. Dabei besteht der Fahrzeugrahmen aus Längsträgern, die ganz oder teilweise aus einem geschlossenen Querschnittsprofil bestehen. Alternativ kann der Fahrzeugrahmen auch aus einem Querschnittsprofil bestehen, der aus einer Kombination von einem offenen und einem geschlossenen Querschnittsprofil gebildet werden.

Erstreckt sich nun die Aufnahme zwischen den beiden Innenseiten des Fahrzeugrahmens, so stützt diese die Innenseiten des Fahrzeugrahmens gegeneinander ab. Das heißt, wird eine Seite des Profils belastet, so leitet die Aufnahme die darauf einwirkenden Kräfte zu der anderen Innenseite, an der die Aufnahme anliegt weiter. Darüber hinaus ist vorgesehen, dass die Aufnahme eine durchgängige Öffnung zur Aufnahme der Befestigungsmittel ausbildet, die sich durch das gesamte geschlossene Querschnittsprofil des Fahrzeugrahmen hindurch erstreckt. Bei einer besonders bevorzugten und einfachen Ausführungsform ist die Öffnung als kreisrunde Durchgangsbohrung zur Aufnahme eines Schraubbolzens ausgebildet. Das bedeutet, dass das zweite Querschnittsprofil der Aufnahme als kreisrunde Öffnung zur Aufnahme des Befestigungsmittels, nämlich des Schraubbolzens, ausgebildet ist. An dieser besonders einfachen Variante der Erfindung reichen somit zwei einfache Bohrungen als Eintritt und Austritt der Aufnahme durch das geschlossene Querschnittsprofil sowie ein Bolzen mit einer Durchgangsbohrung aus, um die vorliegende Erfindung zu realisieren. Befestigt man nun eine Fahrzeugkomponente, wie beispielsweise einen Längslenkerbock oder eine Stabilisatoraufnahme des Fahrwerks am Fahrzeugrahmen, kann dieses mittels einer üblichen Schraubverbindung am geschlossenen Querschnittsprofil befestigt werden, ohne das die Gefahr besteht, dass die hohen Anpasskräfte der Schraubverbindung das geschlossene Querschnittsprofil verformen. Eine Krafteinleitung der zu befestigenden Komponenten in Längsrichtung der Aufnahme kann dabei ausschließlich über die Anlageflächen der Komponenten erfolgen. Die Aufnahme selbst muss lediglich Kräfte in normalen Richtung zur Längsrichtung der Aufnahme über die Befestigungsmittel in das Profil des Fahrzeugrahmens einleiten.

Bei einer besonders bevorzugten Weiterbildung der vorliegenden Erfindung ist zudem vorgesehen, dass die erste und zweite Innenseite des Fahrzeugrahmens vorzugsweise parallel, höchstens aber unter einem Winkel von +- 90° zueinander verlaufen. Bei diesen gewählten Konfigurationen kann die Aufnahme eine besonders gute abstützende Wirkung der Profilseiten gegeneinander erreichen.

Weiterhin ist bei einer anderen besonders bevorzugten Ausführungsform der Erfindung vorgesehen, dass der Fahrzeugrahmen zumindest teilweise als geschlossenes Querschnittsprofil ausgebildet ist. Durch die Verwendung eines geschlossenen Querschnittsprofils kann der Fahrzeugrahmen eine besonders hohe Verbindungssteifigkeit aufweisen. Besonders bei schwer belasteten geländegängigen Fahrzeugen, wie Militärfahrzeugen oder Baustellenfahrzeugen, ist diese Form der Querschnittsprofile vorteilhaft einsetzbar.

Ebenfalls vorteilhaft ist es, wenn das zweite Querschnittsprofil als geschlossenes Querschnittsprofil ausgebildet ist. Das zweite Querschnittsprofil ist das Querschnittsprofil der Aufnahme. Wie bereits oben erwähnt kann bei einer besonders einfachen Ausführungsform ein runder Bolzen mit einer parallel zu seiner Längsachse verlaufenden Durchgangsbohrung als besonders einfaches Ausführungsbeispiel für ein zweites Querschnittsprofil einer Aufnahme gewählt werden. Darüber hinaus ist aber auch denkbar, beispielsweise rechteckige, dreieckige, vieleckige oder andere Querschnittsprofile zu verwenden. Die in den Aufnahmen vorgesehenen Öffnungen zur Aufnahme der Befestigungsmittel können wahlweise glatt, mit oder ohne Nut als Verdrehsicherung bzw. mit oder ohne Gewinde ausgebildet sein. Wesentlich bei dieser Ausführungsform ist jedoch, dass auch das zweite Querschnittsprofil als geschlossenes Querschnittsprofil ausgebildet ist, um damit im zusammengebautem Zustand das geschlossene Querschnittsprofil des Fahrzeugrahmens nach außen hin abzudichten und ein Eindringen von Schmutz oder Feuchtigkeit zu verhindern.

Hierzu ist vorteilhafterweise vorgesehen, dass der Fahrzeugrahmen und die Aufnahme wenigstens wasser- und/oder gasdicht verbunden sind. Hierdurch sollen Schmutz, Salzwasser, Feuchtigkeit und andere unerwünschte Elemente vom Eindringen in den Bereich des geschlossenen Querschnittsprofils des Fahrzeugrahmens gehindert werden. Dies dient der Dauerhaltbarkeit, um den Fahrzeugrahmen auch über einen langjährigen Zeitraum ohne Einschränkungen betreiben zu können.

Bei einer anderen bevorzugten Ausführungsform der Erfindung ist vorgesehen, dass die Aufnahme über eine Außenseite des Fahrzeugrahmens hinausragt. Hierdurch kann der Krafteinleitungspunkt weg von der Außenseite des Fahrzeugrahmens gelegt werden. Dies führt dazu, dass Spannkräfte, welche von verwendeten Schraubverbindungen aufgebracht werden, nicht in das geschlossene Querschnittsprofil des Fahrzeugrahmens eingeleitet werden, sondern von der Aufnahme der Befestigungsmittel aufgenommen werden. Somit können Verformungen des geschlossenen Querschnittsprofils des Fahrzeugrahmens verhindert werden und eine Krafteinleitung erfolgt nur über die definierten Verbindungsstellen zwischen Aufnahme und Fahrzeugrahmen. Zudem ist es auf diese Weise möglich, die Aufnahme durch an der Außenseite des Fahrzeugrahmens liegende Schweißverbindungen in besonders einfacher Weise gas- und wasserdicht anzubinden.

Um den unterschiedlichen Anforderungen Rechnung zu tragen ist es in diesem Zusammenhang vorteilhaft, wenn die Aufnahme und der Fahrzeugrahmen aus unterschiedlichen Werkstoffen gefertigt sind. So können die Aufnahmen aus besonders hochfestem Stahl gefertigt sein, während das Profil des Fahrzeugrahmens aus üblichen und deutlich kostengünstigeren Werkstoffen gefertigt ist.

Die Befestigungseinrichtung sieht dabei vorteilhafterweise vor, dass die Aufnahme und der Fahrzeugrahmen durch Press-, Schweiß- oder Klebeverbindung miteinander verbunden oder abgedichtet sind. Je nach Anwendungsfall kann die Verbindung zwischen Aufnahme und Fahrzeugrahmen somit zur Fixierung der Aufnahme am Fahrzeugrahmen und/oder Abdichtung zwischen Aufnahme und Fahrzeugrahmen verwendet werden. Besonders durch Verschweißen der Aufnahme mit dem Fahrzeugrahmen kann sichergestellt werden, dass das geschlossene Profil des Fahrzeugrahmens durch den hindurchtretenden Abschnitt der Aufnahme nicht nach außen hin geöffnet wird. Die Dichtung ist dabei wahlweise durch Schweißen, Pressen oder Stauchen zu erzielen. Bei relativ weichen Werkstoffen der Aufnahme kann die Aufnahme soweit gestaucht werden, dass sie sich an eine Durchgangsöffnung im Fahrzeugrahmen dicht anschmiegt. Alternativ können aber auch Dichtmittel vorgesehen sein, die beim Schließen der Befestigungsmittel wie beispielsweise dem Drehen der Schraubverbindungen dichtend verpresst werden.

Schließlich wird die Aufgabe auch durch ein geländegängiges Nutzfahrzeug mit einem Fahrzeugrahmen gelöst, der ein zumindest teilweise geschlossenes Querschnittsprofil aufweist, wobei wenigstens eine Befestigungseinrichtung nach einem der vorhergehenden Ansprüche ausgebildet ist. Ein solches Fahrzeug hat ein besonders verwindungssteifen Fahrzeugrahmen, der trotz eingebauter Komponenten keinerlei Einbußen hinsichtlich der Eigenschaften des geschlossenen Querschnittsprofils aufweist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt ist. In der Zeichnung zeigt schematisch:
- Fig. 1: eine Seitenansicht eines ersten Ausführungsbeispiels der Erfindung;
- Fig. 2: ein Querschnittsprofil des Ausführungsbeispiels nach Fig. 1;
- Fig. 3: ein zweites erfindungsgemäßes Ausführungsbeispiel in einer Seitenansicht; und
- Fig. 4: ein Querschnittprofil eines dritten Ausführungsbeispiels.

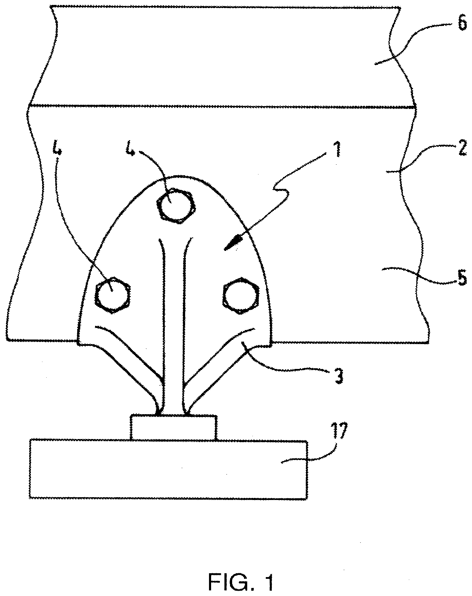

In Fig. 1 ist ein erstes erfindungsgemäßes Ausführungsbeispiel einer Befestigungseinrichtung 1 in einer Seitenansicht dargestellt. Dabei ist ein Fahrzeugrahmen 2 abschnittsweise in einer Seitenansicht dargestellt. Am Fahrzeugrahmen 2 ist eine Komponente 3 mittels Schrauben 4 befestigt.

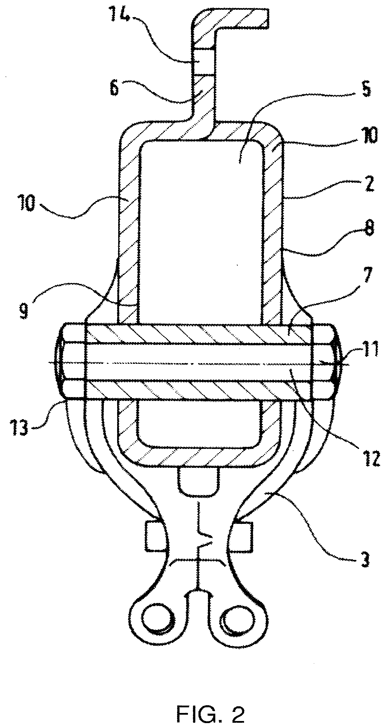

In Fig. 2 ist der Fahrzeugrahmen 2 nach Figur 1 nochmals in einer Querschnittsansicht dargestellt. Gut erkennbar ist hierbei, dass der Fahrzeugrahmen 2 aus einem geschlossenem Querschnittsprofil 5 und einem offenen Querschnittsprofil 6 besteht. Durch das geschlossene Querschnittsprofil 5 ragt eine Aufnahme 7, welche sich von einer ersten Innenseite 8 hin zu einer zweiten Innenseite 9 erstreckt. Die Aufnahme 7 ragt seitlich jeweils über die Außenseite 10 hinaus. An der Unterseite ist die Komponente 3 dargestellt, welche den Fahrzeugrahmen 2 annähernd U-förmig umgreift. Die Aufnahme 7 ihrerseits ist als kreisrunder Bolzen mit einer Durchgangsbohrung ausgebildet, durch den ein Befestigungsmittel 11 hindurchragt. Die Bohrung bildet dabei die Öffnung 12 zur Aufnahme des Befestigungsmittels. Bei dem in Fig. 2 gezeigten Ausführungsbeispiel ist die Aufnahme 7 einfach durch Eintrittsöffnungen 13 im geschlossenen Querschnittsprofil 5 durchgesteckt und nicht weiter mit diesem verbunden. Trotzdem kann der erfindungsgemäße Vorteil erreicht werden, dass bei einem Anziehen der Befestigungsmittel 11 keinerlei Verformung des geschlossenen Querschnittsprofils 5 stattfindet und beim Einbringen von Belastungen über die Komponente 3 diese entweder durch die Anlagefläche der Komponente 3 am Fahrzeugrahmen 2 oder über die Aufnahme 7 in die Durchtrittsöffnungen 13 eingeleitet werden. Ggf. kann die Aufnahme durch Druckkräfte beim Anschrauben soweit gestaucht werden, dass sie dicht am Fahrzeugrahmen 2 anliegt.

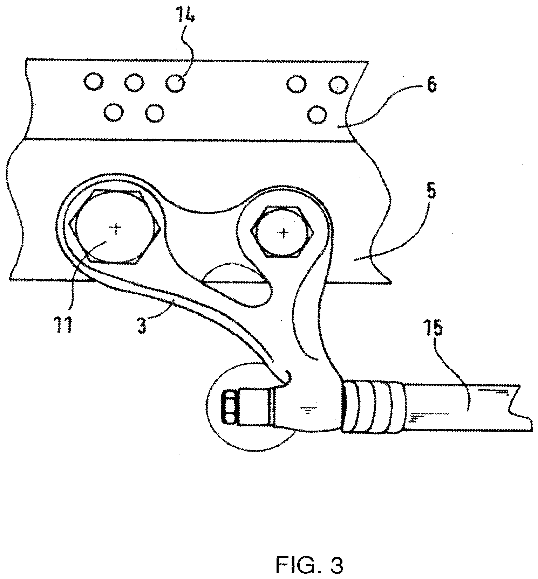

Fig. 3 zeigt nun ein anderes erfindungsgemäßes Ausführungsbeispiel in einer Seitenansicht, bei der ein Fahrzeugrahmen 2 ein geschlossenes Querschnittsprofil 5 im unteren Bereich und ein offenes Querschnittsprofil 6 im oberen Bereich aufweist. Das offene Querschnittsprofil 6 ist dabei mit verschiedenen Bohrungen versehen. Die Komponente 3 dient bei dieser Ausführungsform zur Aufnahme eines Lenkers 15. Auch bei dieser Ausführungsform sind als Befestigungsmittel 11 wiederum Schraubverbindungen gewählt, wobei auch andere geeignete Befestigungsmittel im Rahmen der Erfindung eingesetzt werden können.

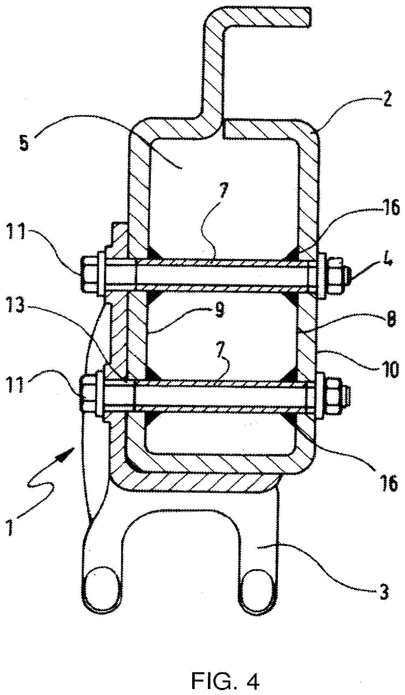

Fig. 4 zeigt schließlich die Ausführungsform nach Fig. 1 in einer seitlichen Schnittansicht, wobei die Komponente 3 L-förmig das geschlossene Querschnittsprofil 5 des Fahrzeugrahmens 2 umgreift. Die Befestigungsmittel 11 sind dabei in zwei Reihen angeordnet, wobei die aus Schraubenbolzen und Muttern bestehenden Schrauben 4 die erste Innenseite 8 und die zweite Innenseite 9 in orthogonaler Richtung durchdringen. Gleiches gilt für die Aufnahmen 7, welche die Schrauben 4 umschließen.

Die erfindungsgemäße Befestigungseinrichtung 1 weist bei dieser Ausführungsform Aufnahmen 7 auf, welche mit dem Fahrzeugrahmen über Schweißverbindungen 16 verbunden sind. Bei der in dieser Figur gezeigten Ausführungsform reichen die Aufnahmen 7 bis zur Außenseite 10 des geschlossenen Querschnittsprofils 5. Jegliche Krafteinleitung auf die Außenseite 10 des geschlossenen Profils 5 führt somit zu einer Krafteinleitung in die Aufnahme 7 und damit zu einer Abstützung an der gegenüberliegenden Innenseite 8 bzw. 9.

Die Aufnahme 7 ist mittels der Schweißverbindung 16 vorzugsweise an den Durchtrittsöffnungen 13 verschweißt oder verklebt.

Im Übrigen ist festzustellen, dass die vorliegende Erfindung nicht auf die dargestellten Ausführungsbeispiele beschränkt ist. Es sind vielmehr zahlreiche Abwandlungen der Erfindung im Rahmen der Patentansprüche möglich. So erkennt der Fachmann, dass andere als die beschriebenen Schweißverbindungen zusammen mit der vorliegenden Erfindung angewendet werden können.

### Bezugszeichenliste:

- 1: Befestigungseinrichtung
- 2: Fahrzeugrahmen
- 3: Komponenten
- 4: Schraube
- 5: geschlossenes Querschnittsprofil
- 6: offenes Querschnittsprofil
- 7: Aufnahme
- 8: erste Innenseite
- 9: zweite Innenseite
- 10: Außenseite
- 11: Befestigungsmittel
- 12: Öffnung
- 13: Durchtrittsöffnung
- 14: Bohrung
- 15: Lenker
- 16: Schweißverbindung

## Patentansprüche

1. Befestigungseinrichtung (1) zur Befestigung wenigstens einer Komponente (3) an einem Fahrzeugrahmen (2), wobei der Fahrzeugrahmen (2) ein erstes geschlossenes Querschnittsprofil (5) aufweist, und wobei wenigstens eine Aufnahme (7) für Befestigungsmittel (11) vorgesehen ist, die ein zweites Querschnittsprofil aufweist, wobei sich die Aufnahme (7) von einer ersten Innenseite (8) des Fahrzeugsrahmens (2) hin zu wenigstens einer zweiten Innenseite (9) des Fahrzeugrahmens (2) erstreckt und eine Öffnung zur Aufnahme der Befestigungsmittel (11) ausbildet, **dadurch gekennzeichnet, dass** das zweite Querschnittsprofil der Aufnahme (7) als geschlossenes Querschnittsprofil ausgebildet ist und eine durchgängige Öffnung zur Aufnahme der Befestigungsmittel (11) ausbildet, die sich durch das gesamte geschlossene Querschnittsprofil des Fahrzeugrahmens (2) hindurch erstreckt.

2. Befestigungseinrichtung (1) nach Anspruch 1, **dadurch gekennzeichnet, dass** die erste und zweite Innenseite (8, 9) des Fahrzeugrahmens (2) vorzugsweise parallel, höchstens aber unter einem Winkel von +-90°, zueinander verlaufen.

3. Befestigungseinrichtung (1) nach einem der vorhergehenden Ansprüche, **dadurch gekennzeichnet, dass** der Fahrzeugrahmen (2) zumindest teilsweise als geschlossenes Querschnittsprofil ausgebildet ist.

4. Befestigungseinrichtung (1) nach einem der vorhergehenden Ansprüche, **dadurch gekennzeichnet, dass** der Fahrzeugrahmen (2) und die Aufnahmen (7) wenigstens wasser- und/oder gasdicht verbunden sind.

5. Befestigungseinrichtung (1) nach einem der vorhergehenden Ansprüche, **dadurch gekennzeichnet, dass** die Aufnahme (7) über eine Außenseite (10) des Fahrzeugrahmens (2) hinausragt.

6. Befestigungseinrichtung (1) nach einem der vorhergehenden Ansprüche, **dadurch gekennzeichnet, dass** die Aufnahme (7) und der Fahrzeugrahmen (2) aus unterschiedlichen Werkstoffen gefertigt sind.

7. Befestigungseinrichtung (1) nach einem der vorhergehenden Ansprüche, **dadurch gekennzeichnet, dass** die Aufnahme (7) und der Fahrzeugrahmen (2) durch Press-, Schweiß- oder Klebeverbindung miteinander verbunden oder abgedichtet sind.

8. Geländegängiges Nutzfahrzeug mit einem Fahrzeugrahmen (2), der ein geschlossenes Querschnittsprofil (5) aufweist, wobei wenigstens eine Befestigungseinrichtung (1) nach einem der vorhergehenden Ansprüche ausgebildet ist.

## Claims

1. Fastening device (1) for fastening at least one component (3) to a vehicle frame (2), wherein the vehicle frame (2) has a first closed cross-sectional profile (5), and wherein at least one receptacle (7) for fastening means (11) is provided, said receptacle having a second cross-sectional profile, wherein the receptacle (7) extends from a first inner side (8) of the vehicle frame (2) as far as at least a second inner side (9) of the vehicle frame (2) and forms an opening for receiving the fastening means (11), **characterized in that** the second cross-sectional profile of the receptacle (7) is designed as a closed cross-sectional profile and forms a continuous opening for receiving the fastening means (11), said opening extending through the entire closed cross-sectional profile of the vehicle frame (2).

2. Fastening device (1) according to Claim 1, **characterized in that** the first and second inner side (8, 9) of the vehicle frame (2) run with respect to each another preferably in parallel, but at most at an angle of +-90°.

3. Fastening device (1) according to either of the preceding claims, **characterized in that** the vehicle frame (2) is at least partially designed as a closed cross-sectional profile.

4. Fastening device (1) according to one of the preceding claims, **characterized in that** the vehicle frame (2) and the receptacles (7) are connected at least in a water- and/or gas-tight manner.

5. Fastening device (1) according to one of the preceding claims, **characterized in that** the receptacle (7) projects beyond an outer side (10) of the vehicle frame (2).

6. Fastening device (1) according to one of the preceding claims, **characterized in that** the receptacle (7) and the vehicle frame (2) are manufactured from different materials.

7. Fastening device (1) according to one of the preceding claims, **characterized in that** the receptacle (7) and the vehicle frame (2) are connected to each other or sealed by a press connection, welding connection or adhesive bonding connection.

8. Off-road utility vehicle with a vehicle frame (2) which has a closed cross-sectional profile (5), wherein at least one fastening device (1) is designed according to one of the preceding claims.

## Revendications

1. Dispositif de fixation (1) pour la fixation d'au moins un composant (3) sur un châssis de véhicule (2), le châssis de véhicule (2) présentant un premier profilé en section transversale fermé (5) et au moins un logement (7) étant prévu pour des moyens de fixation (11), lequel présente un deuxième profilé en section transversale, le logement (7) s'étendant depuis un premier côté intérieur (8) du châssis de véhicule (2) vers au moins un deuxième côté intérieur (9) du châssis de véhicule (2) et constituant une ouverture pour recevoir les moyens de fixation (11), **caractérisé en ce que** le deuxième profilé en section transversale du logement (7) est réalisé sous forme de profilé en section transversale fermé et constitue une ouverture de passage pour recevoir les moyens de fixation (11), laquelle s'étend à travers l'ensemble du profilé en section transversale fermé du châssis de véhicule (2).

2. Dispositif de fixation (1) selon la revendication 1, **caractérisé en ce que** le premier et le deuxième côté intérieur (8, 9) du châssis de véhicule (2) s'étendent de préférence parallèlement, mais au maximum toutefois suivant un angle de ± 90° l'un par rapport à l'autre.

3. Dispositif de fixation (1) selon l'une quelconque des revendications précédentes, **caractérisé en ce que** le châssis de véhicule (2) est réalisé au moins en partie sous forme de profilé en section transversale fermé.

4. Dispositif de fixation (1) selon l'une quelconque des revendications précédentes, **caractérisé en ce que** le châssis de véhicule (2) et les logements (7) sont connectés au moins de manière étanche à l'eau et/ou au gaz.

5. Dispositif de fixation (1) selon l'une quelconque des revendications précédentes, **caractérisé en ce que** le logement (7) fait saillie au-delà d'un côté extérieur (10) du châssis de véhicule (2).

6. Dispositif de fixation (1) selon l'une quelconque des revendications précédentes, **caractérisé en ce que** le logement (7) et le châssis de véhicule (2) sont fabriqués avec des matériaux différents.

7. Dispositif de fixation (1) selon l'une quelconque des revendications précédentes, **caractérisé en ce que** le logement (7) et le châssis de véhicule (2) sont connectés ensemble ou étanchéifiés l'un par rapport à l'autre par une liaison par pressage, soudage ou collage.

8. Véhicule utilitaire terrestre comprenant un châssis de véhicule (2) qui présente un profilé en section transversale fermé (5), au moins un dispositif de fixation (1) étant réalisé selon l'une quelconque des revendications précédentes.
